# EUROPÄISCHE PATENTSCHRIFT

(11) **EP 2 807 053 B1**
(45) Veröffentlichungstag und Bekanntmachung des Hinweises auf die Patenterteilung: **27.12.2017**
(21) Anmeldenummer: 13702883.3
(22) Anmeldetag: 17.01.2013
(51) Int. Cl.: B60P 1/54

(54) **VORRICHTUNG ZUM BEWEGEN VON LASTEN INNERHALB EINES FAHRZEUGS, FAHRZEUG SOWIE VERFAHREN ZUM BEWEGEN VON LASTEN INNERHALB EINES FAHRZEUGS**
DEVICE FOR MOVING LOADS INSIDE A VEHICLE, VEHICLE, AND METHOD FOR MOVING LOADS INSIDE A VEHICLE
DISPOSITIF POUR DÉPLACER DES CHARGES DANS UN VÉHICULE, VÉHICULE AINSI QUE PROCÉDÉ POUR DÉPLACER DES CHARGES DANS UN VÉHICULE

(30) Priorität: 24.01.2012 DE 102012100576
(43) Veröffentlichungstag der Anmeldung: 03.12.2014
(73) Patentinhaber: Krauss-Maffei Wegmann GmbH & Co. KG, 80997 München (DE)
(72) Erfinder: STODOLKA, Sascha, 34127 Kassel (DE)
(74) Vertreter: Feder Walter Ebert
(86) Internationale Anmeldenummer: PCT/DE2013/100013
(87) Internationale Veröffentlichungsnummer: WO 2013/110266

(56) Entgegenhaltungen:
- DE-U- 1 877 177
- US-A- 5 348 439
- US-A1- 2007 122 260

## Beschreibung

Die Erfindung betrifft eine Vorrichtung zum Bewegen von Lasten innerhalb eines Fahrzeugs mit einer Befestigungsvorrichtung zur Befestigung an dem Fahrzeug und einer gegenüber der Befestigungsvorrichtung bewegbar angeordneten Lastaufnahme. Die Erfindung betrifft ferner ein Fahrzeug, insbesondere ein militärisches Fahrzeug, mit einer Vorrichtung zum Bewegen von Lasten innerhalb des Fahrzeugs, mit einer Befestigungsvorrichtung zur Befestigung an dem Fahrzeug und einer gegenüber der Befestigungsvorrichtung bewegbar angeordneten Lastaufnahme. Einen weiteren Gegenstand der Erfindung bildet ein Verfahren zum Bewegen von Lasten innerhalb eines Fahrzeugs mit einer Vorrichtung, die über eine Befestigungsvorrichtung an dem Fahrzeug festgelegt ist, und einer gegenüber der Befestigungsvorrichtung bewegbar angeordneten Lastaufnahme.

Insbesondere innerhalb von militärischen Fahrzeugen ist es von Zeit zu Zeit erforderlich, schwere Bauteile oder Baugruppen beispielsweise zu Montage-, Reparatur- oder Wartungszwecken zu bewegen. Ein manuelles Wuchten oder Heben der Bauteile ist aufgrund deren teilweise erheblichen Gewichts und der im Inneren des Fahrzeugs oftmals beengten Platzverhältnisse selbst für geübtes Personal schwer oder nur unter Inkaufnahme ergonomisch bedenklicher Arbeitsschritte möglich.

In der Praxis werden zur Durchführung solcher Arbeiten daher oftmals Lastenheber eingesetzt, die beispielsweise nach Art eines Flaschenzugs im Deckenbereich des Fahrzeugs befestigt werden. Über eine beispielsweise als Einhängehaken ausgebildete Lastaufnahme können dann auch vergleichsweise schwere Bauteile mit geringerem Kraftaufwand angehoben werden.

Um derartige Lastenheber innerhalb des Fahrzeugs befestigen zu können, ist oftmals vorgesehen, dass diese über eigens hierfür vorzusehende Befestigungspunkte im Dachbereich des Fahrzeugs arretiert werden. Als Befestigungspunkte dienen beispielsweise mit der Dachfläche von unten her verschweißte Haken. In Fällen, in denen das Bauteil nicht nur angehoben, sondern beispielsweise auch in Längsrichtung des Fahrzeugs translatorisch bewegt werden soll, werden als Befestigungspunkte Schienensysteme verwendet.

Diese Art der Befestigung hat sich insoweit als nachteilig erwiesen, als dass sich die Befestigungspunkte von der Decke her nach unten in den Innenraum des Fahrzeug erstrecken, wodurch der für die Besatzung des Fahrzeugs zur Verfügung stehende, insbesondere im militärischen Bereich ohnehin meist knapp bemessene Innenraum reduziert wird.

Weiterhin sind Vorrichtungen bekannt, beispielsweise aus der US 5,348,439 A1, die in einem Türausschnitt befestigt werden können, um Lasten in das und aus einem Fahrzeug zu heben und zeigen somit den Oberbegriff des Anspruchs 1.

Der Erfindung liegt die **Aufgabe** zu Grunde, eine Vorrichtung, ein Fahrzeug, sowie ein Verfahren anzugeben, welche eine einfache Handhabung schwerer Lasten in einem Fahrzeuginnenraum erlauben, ohne dass dies den zur Verfügung stehenden Fahrzeuginnenraum beeinträchtigt.

Bei einer Vorrichtung der eingangs genannten Art wird zur Lösung der Aufgabe vorgeschlagen, eine Vorrichtung mit den Merkmalen des Anspruchs 1 in einer Fahrzeugöffnung zu arretieren. Durch die Arretierung der Befestigungsvorrichtung innerhalb der Fahrzeugöffnung ist es möglich, eine ohnehin vorgesehene Fahrzeugöffnung als Befestigungspunkt für die Vorrichtung zu nutzen. Es ist nicht erforderlich, zusätzliche Befestigungspunkte zur Arretierung der Befestigungsvorrichtung vorzusehen, weshalb der verfügbare Innenraum des Fahrzeugs nicht beeinträchtigt wird. Bei einem Fahrzeug der eingangs genannten Art wird zur Lösung der vorstehenden Aufgabe vorgeschlagen, dass die Befestigungsvorrichtung in einer Fahrzeugöffnung, die von einer Dachluke gebildet wird, arretiert ist.

Durch die Arretierung der Befestigungsvorrichtung innerhalb der Fahrzeugöffnung ist es möglich, eine ohnehin vorgesehene Fahrzeugöffnung als Befestigungspunkt für die Vorrichtung zu nutzen. Es ist nicht erforderlich, zusätzliche Befestigungspunkte zur Arretierung der Befestigungsvorrichtung vorzusehen, weshalb der verfügbare Innenraum des Fahrzeugs nicht beeinträchtigt wird.

Weitere vorteilhafte Ausgestaltungen der Vorrichtung wie auch des Fahrzeugs sind insbesondere in den abhängigen Unteransprüchen 2 bis 13 angegeben und sollen nachfolgend erläutert werden. Nach der erfindungsgemässen Ausgestaltung wird vorgeschlagen, dass die Fahrzeugöffnung von einer Dachluke gebildet wird. Hierdurch wird die Möglichkeit einer einfachen Montage der Vorrichtung in dem Fahrzeug durch Öffnen der Luke und anschließendes Einsetzen der Vorrichtung in die Luke geschaffen. Vorzugsweise weist die Befestigungsvorrichtung an einer nach oben weisenden Fläche angeordnete Handgriffe auf, so dass das Einsetzen der Befestigungsvorrichtung in die Fahrzeugöffnung vereinfacht wird, insbesondere im Falle einer Dachluke, in welche die Befestigungsvorrichtung von oben bzw. außen her durch Absenken eingesetzt werden kann. In einer weiteren bevorzugten Ausführungsform ist die Befestigungsvorrichtung lösbar an der Fahrzeugöffnung arretiert bzw. arretierbar, so dass nach erfolgter Bewegung der Lasten die Vorrichtung von der Fahrzeugöffnung gelöst und bis zu deren nächster Verwendung in geeigneter Position verstaut werden kann.

In Weiterbildung der Erfindung weist die Befestigungsvorrichtung Klemmen zur Befestigung an der Fahrzeugöffnung auf. Durch die Klemmverbindung kann die Befestigungsvorrichtung auf einfache Weise in der Fahrzeugöffnung arretiert bzw. von dieser gelöst werden. Auch eignet sich eine solche Ausgestaltung für eine Vielzahl bereits im Betrieb befindlicher Fahrzeuge, da die Klemmen an vielerlei Fahrzeugöffnungen arretiert werden können, ohne dass die Fahrzeugöffnungen hierfür beispielsweise durch irgendwelche Konstruktionsmaßnahmen vorbereitet werden müssten.

Vorzugsweise sind die Befestigungsvorrichtung und die Lastaufnahme, an welcher die Lasten gehalten und innerhalb des Fahrzeugs bewegt werden, über einen Ausleger verbunden. Über den Ausleger ist es möglich, Lasten auch in gegenüber der Fahrzeugöffnung beabstandeten Positionen im Inneren des Fahrzeugs zu bewegen. Über den Ausleger können die Lasten nicht nur angehoben werden. Durch Verschwenken des Auslegers sind auch translatorische Bewegungen der Last innerhalb des Fahrzeugs möglich.

In einer bevorzugten Weiterbildung ist die Länge des Auslegers einstellbar. Durch die Einstellung der Länge des Auslegers kann der Abstand zwischen der Befestigungsvorrichtung und der Lastaufnahme verändert werden, so dass die Lastaufnahme viele Positionen im Inneren des Fahrzeugs erreichen kann. Auch wird eine Möglichkeit geschaffen, eine in der Lastaufnahme aufgenommene Last durch Veränderung der Auslegerlänge translatorisch zu bewegen.

In diesem Zusammenhang ist es ferner von Vorteil, wenn der Ausleger teleskopierbar ausgebildet ist. Hierzu kann der Ausleger zwei Teleskopstangen aufweisen, die gegeneinander bewegbar und in verschiedenen Stellungen gegeneinander arretierbar sind, beispielsweise durch einen Steckbolzen.

Vorzugsweise weist der Ausleger ferner ein Knickgelenk zum Verschwenken der Lastaufnahme auf. Durch die Ausgestaltung des Auslegers mit einem Knickgelenk wird eine Verschwenkmöglichkeit der Lastaufnahme gegenüber der Befestigungsvorrichtung oder den übrigen Komponenten des Auslegers ermöglicht. Es ergibt sich ein größerer Bewegungsbereich der Lastaufnahme innerhalb des Fahrzeugs, da diese aufgrund des Knickgelenks auch in hinter anderen Gegenständen liegende Bereiche gelangen kann.

In einer bevorzugten Ausgestaltung ist der Ausleger seitlich verschwenkbar gegenüber der Befestigungsvorrichtung gelagert. Hierdurch wird vorteilhaft ein weiterer Freiheitsgrad der Bewegung der Lasten an der Lastaufnahme geschaffen und der Bewegungsbereich der Lastaufnahme vergrößert.

Ferner bevorzugt ist der Ausleger höhenverschwenkbar an der Befestigungsvorrichtung angeordnet, so dass in der Lastaufnahme aufgenommene Lasten durch Verschwenken des Auslegers angehoben oder abgesenkt werden können.

In einer weiteren bevorzugten Ausgestaltung weist der Ausleger zur Führung der Höhenbewegung der Lastaufnahme ein Parallelogrammgestänge auf. Durch das Parallelogrammgestänge wird eine stets gleiche Orientierung der Lastaufnahme beim Anheben der Lasten erreicht.

In einer weiteren bevorzugten Ausgestaltung ist der Ausleger über eine Hubvorrichtung, insbesondere über eine als Gewindetrieb ausgebildete Hubvorrichtung, höhenverstellbar. Über die Hubvorrichtung lassen sich auch schwere Lasten mit geringem Kraftaufwand anheben.

Besonders bevorzugt ist der Ausleger hängend an der Befestigungsvorrichtung angeordnet. Aufgrund der hängenden Anordnung des Auslegers verbleit unterhalb der Befestigungsvorrichtung ein Freiraum, in welchem sich ein Monteur beim Bedienen der Vorrichtung aufhalten kann.

In einer besonders bevorzugten Ausgestaltung bildet die Befestigungsvorrichtung den höchsten Punkt der Vorrichtung, wodurch vorteilhaft ein großer Bewegungsraum unterhalb der Befestigungsvorrichtung für den Ausleger und die Lastaufnahme zur Verfügung gestellt wird.

Schließlich wird vorgeschlagen, dass die Befestigungsvorrichtung derart ausgebildet ist, dass sie von fahrzeugaußen in der Fahrzeugöffnung arretierbar ist. Dies vereinfacht die Montage der Vorrichtung, da diese nicht unter den beengten Platzverhältnissen aus dem Fahrzeuginneren montiert werden muss.

Bei einem Verfahren der eingangs genannten Art wird zur Lösung der vorstehenden Aufgabe vorgeschlagen, dass in einem Schritt die Befestigungsvorrichtung in einer Fahrzeugöffnung, die von einer Dachluke gebildet wird, arretiert und in einem späteren Schritt die Last innerhalb des Fahrzeugs bewegt wird.

Durch die Arretierung der Befestigungsvorrichtung innerhalb der Fahrzeugöffnung ist es möglich, eine ohnehin vorgesehene Fahrzeugöffnung als Befestigungspunkt für die Vorrichtung zu nutzen. Es ist nicht erforderlich, zusätzliche Befestigungspunkte zur Arretierung der Befestigungsvorrichtung vorzusehen, weshalb der verfügbare Innenraum des Fahrzeugs nicht beeinträchtigt wird. Bereits nach kurzer Installationszeit lassen sich auf diese Weise Lasten innerhalb des Fahrzeugs bewegen.

Vorteilhaft ist die Vorrichtung in der zuvor beschriebenen Weise ausgebildet, wobei sämtliche im Zusammenhang mit der Vorrichtung bzw. dem Fahrzeug beschriebenen Verfahrensschritte einzeln oder in Kombination untereinander Anwendung finden können.

Weitere Vorteile und Einzelheiten einer erfindungsgemäßen Vorrichtung, eines erfindungsgemäßen Fahrzeugs und eines erfindungsgemäßen Verfahrens werden nachfolgend unter Zuhilfenahme der beigefügten Darstellung eines Ausführungsbeispiels erläutert. Darin zeigen:
- Fig. 1:: eine Vorrichtung zum Bewegen von Lasten in perspektivischer Ansicht,
- Fig. 2:: in vergrößerter Ansicht eine Befestigungsvorrichtung gemäß der Darstellung in Fig. 1,
- Fig. 3:: in vergrößerter Ansicht eine in einer Fahrzeugöffnung eines Fahrzeugs arretierte Befestigungsvorrichtung,
- Fig. 4 A bis C:: in seitlicher Ansicht verschiedene Stellungen einer Vorrichtung gemäß der Darstellung in Fig. 1 zur Veranschaulichung einer Hubbewegung,
- Fig. 5 A bis C:: in Draufsicht verschiedene Stellungen einer Vorrichtung gemäß der Darstellung in Fig. 1 zur Veranschaulichung einer Schwenkbewegung,
- Fig. 6 A und B:: in Draufsicht verschiedene Stellungen einer Vorrichtung gemäß der Darstellung in Fig. 1 zur Veranschaulichung einer Knickbewegung und
- Fig. 7 A bis C:: in Draufsicht verschiedene Stellungen einer Vorrichtung gemäß der Darstellung in Fig. 1 zur Veranschaulichung einer Teleskopierbewegung.

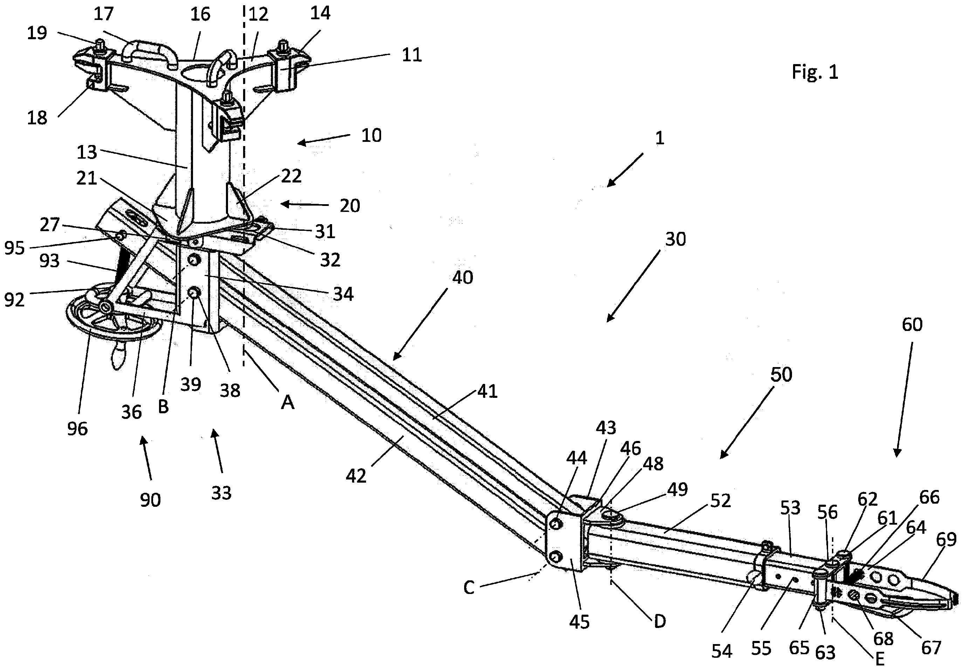

Fig. 1 zeigt eine Vorrichtung 1 zum Bewegen schwerer Lasten, wie beispielsweise Antrieben, Schleifringen, Elektronikkomponenten usw. innerhalb eines militärischen Fahrzeugs.

Die Vorrichtung 1 weist an ihrem einen Ende eine Befestigungsvorrichtung 10 und an ihrem anderen Ende eine greiferartige Lastaufnahme 60 auf, die über einen Ausleger 30 miteinander verbunden sind. Wie nachfolgend im Einzelnen dargelegt werden wird, ist die Vorrichtung 1 über die Befestigungsvorrichtung 10 in einer Fahrzeugöffnung 70 festlegbar ausgebildet und die Lastaufnahme 60 zur Bewegung von Lasten im Inneren des Fahrzeugs gegenüber der Befestigungsvorrichtung 10 in mehreren Richtungen bewegbar angeordnet.

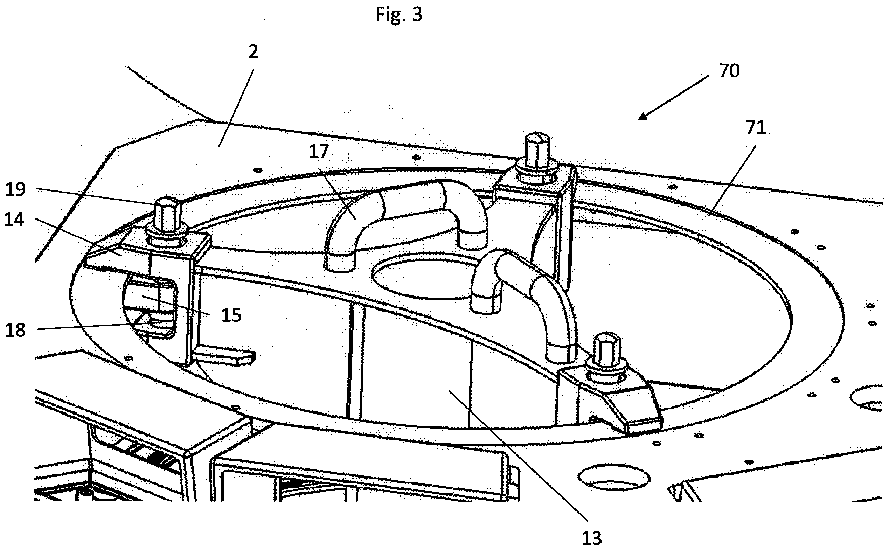

Die Arretierung der Befestigungsvorrichtung 10 in der Fahrzeugöffnung 70 ist in Fig. 3 gezeigt, wobei die Fahrzeugöffnung 70 beim Ausführungsbeispiel von einer im Querschnitt kreisförmigen Luke, bei der es sich um eine Ein- bzw. Ausstiegsluke für die Besatzung des Fahrzeugs handelt, gebildet und seitlich durch einen Lukenring 71 begrenzt wird.

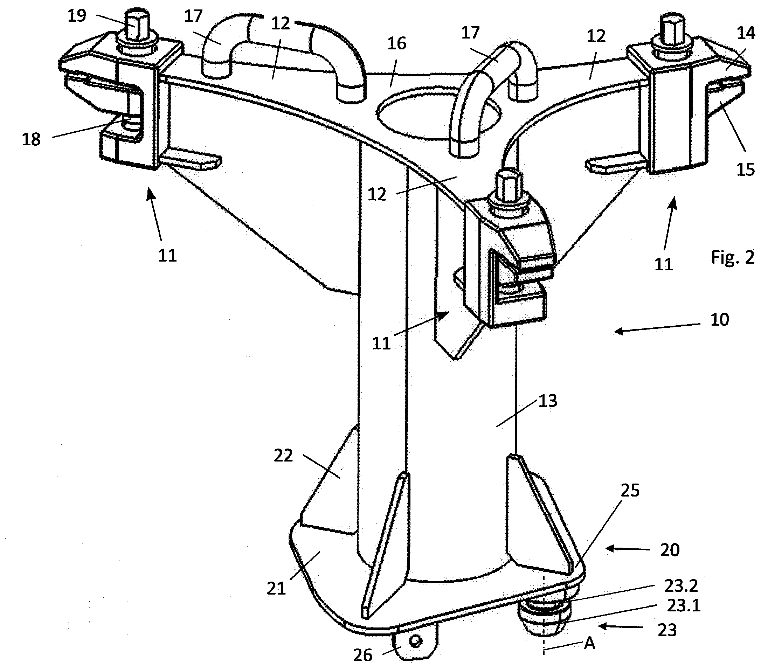

Die Arretierung der Befestigungsvorrichtung 10 an der Fahrzeugöffnung 70 erfolgt über eine lösbare Klemmverbindung. Hierzu weist die Befestigungsvorrichtung 10 mehrere Klemmen 11 auf, die gleichmäßig über den Umfang der Befestigungsvorrichtung 10 verteilt angeordnet sind, vgl. insbesondere Fig. 2. Beim Ausführungsbeispiel sind insgesamt drei Klemmen 11 vorgesehen, die an sich nach radial außen erstreckenden Kragarmen 12 der Befestigungsvorrichtung 10 angeordnet sind. Die Befestigungsvorrichtung 10 weist ein mittig in der Fahrzeugöffnung 70 angeordnetes Zentralstück 13 auf, welches sich in vertikaler Richtung nach unten in den Fahrzeuginnenraum erstreckt und nach Art eines Rohrstücks ausgebildet ist. Die Kragarme 12 sind mit dem Zentralstück 13 beispielsweise durch Schweißen verbunden und jeweils in Winkelabständen von etwa 120° voneinander beabstandet, wodurch sich eine symmetrische Anordnung der an den Kragarmen 12 angeordneten Klemmen 11 ergibt. Auch ist es denkbar, dass das Zentralstück 13 außermittig in der Öffnung 70 angeordnet ist, um auf der einen Seite des Zentralstücks 13 etwas Raum zur Anordnung der Hubvorrichtung 90 zu schaffen.

Die Klemmen 11 sind an den freien Enden der Kragarme 12 angeordnet und weisen jeweils zwei Spannbacken 14, 15 auf. Die obere Spannbacke 14 ist unbeweglich gegenüber der Befestigungsvorrichtung 10 ausgebildet, wohingegen die untere Spannbacke 15 gegenüber der ersten Spannbacke 14 bewegbar ausgebildet ist, um die erforderliche Klemmkraft zwischen den beiden Spannbacken 14, 15 erzeugen zu können.

Zur Arretierung der Befestigungsvorrichtung 10 in der Fahrzeugöffnung 70 wird die Spannbacke 15 aus deren beispielsweise in Fig. 2 dargestellter radialer Ausrichtung zur Seite gedreht, so dass die Befestigungsvorrichtung 10 von fahrzeugaußen her in die Fahrzeugöffnung 70 eingesetzt werden kann. Dabei treten die unteren Spannbacken 15 durch die Fahrzeugöffnung 70 hindurch nach unten in das Innere des Fahrzeugs ein. Die feststehenden oberen Spannbacken 14 definieren einen Radius, der größer ist als jener der Fahrzeugöffnung 70, so dass diese auf dem Rand der Fahrzeugöffnung 70 bzw. dem Lukenring 71 aufliegen. In dieser Stellung werden die unteren Spannbacken 15 wieder in ihre radiale Ausrichtung, die in Fig. 2 dargestellt ist, zurückgedreht. Zur Erzeugung der Klemmverbindung kann die Spannbacke 15 anschließend über eine Schraubvorrichtung 18 von unten gegen die Spannbacke 14 bzw. gegen den Rand der Fahrzeugöffnung 70 verspannt werden. Die Betätigung der Schraubvorrichtung 18 erfolgt über ein Betätigungselement 19, welches von fahrzeugaußerhalb zugänglich ist und beim Ausführungsbeispiel nach Art eines Schlüsselflächen aufweisenden Schraubkopfes ausgebildet ist.

Um dem Monteur ein einfaches Einsetzen der Befestigungsvorrichtung 10 von fahrzeugaußen in die Fahrzeugöffnung 70 zu ermöglichen, weist die Befestigungsvorrichtung 10 zwei Handgriffe 17 auf. Die Handgriffe 17 sind an einer nach oben weisenden Platte 16 der Befestigungsvorrichtung 10 angeordnet. Die Platte 16 ist an die Kontur der Kragarme 12 angepasst und bildet deren oberes, nach fahrzeugaußen weisendes Ende.

In einem Fußbereich 20 des Zentralstücks 13 ist der Ausleger 30 gelenkig mit der Befestigungsvorrichtung 10 verbunden. Der Ausleger 30 kann vor der Arretierung der Befestigungsvorrichtung 10 in der Fahrzeugöffnung 70 mit der Befestigungsvorrichtung 10 verbunden und beim Einsetzen der Befestigungsvorrichtung 10 in die Fahrzeugöffnung 70 durch diese hindurch geführt werden. Alternativ kann zunächst die Befestigungsvorrichtung 10 in der Fahrzeugöffnung 70 arretiert und anschließend der Ausleger 30 von fahrzeuginnen her mit der Befestigungsvorrichtung 10 verbunden werden.

Zur Verbindung mit dem Ausleger 30 weist die Befestigungsvorrichtung 10 eine Anschlussplatte 21 auf, wobei zur Versteifung vier um jeweils Winkel von 90° gegeneinander beabstandete Versteifungsrippen 22 zwischen dem Zentralstück 13 und der Anschlussplatte 21 angeordnet sind. Die Anschlussplatte 21 bildet eine Montagebene für eine am dem Ausleger 30 angeordnete Verbindungsplatte 31, wobei die Versteifungsrippen 22 jeweils im Bereich der Ecken 25 der Abschlussplatte 21 angeordnet sind.

An der Unterseite der Anschlussplatte 21 ist zur drehbaren Befestigung des Auslegers 30 an der Befestigungsvorrichtung 10 ein im Querschnitt pilzförmiges Einhängelement 23 vorgesehen. Das Einhängelement 23 weist einen Kopf 23.1 und einen schmaleren Bolzenabschnitt 23.2 auf.

Über die Verbindungsplatte 31 kann der Ausleger 30 an dem Einhängeelement 23 eingehängt werden. Hierzu weist die Verbindungsplatte 31 ein schlüssellochförmiges Langloch 32 mit einer Einführöffnung zum Einführen des Einhängeelements 23 und einer sich seitlich an die Einführöffnung anschließenden Einschuböffnung auf. Die Verbindungsplatte 31 wird von unten her kommend mit der Einführöffnung des Langlochs 32 über den Kopf 23.1 des Einhängelements 23 geführt und anschließend zur Seite verschoben, wodurch der Bolzenabschnitt 23.1 des Einhängeelements 23 in die schmalere Einschuböffnung des Langlochs 32 gelangt und dort mit einem Riegel gesichert wird. In dieser Stellung hängt die Verbindungsplatte 31 gehalten über den breiteren Kopf 23.1 des Einhängeelements 23 um eine vertikale Achse A schwenkbar unterhalb der Anschlussplatte 21.

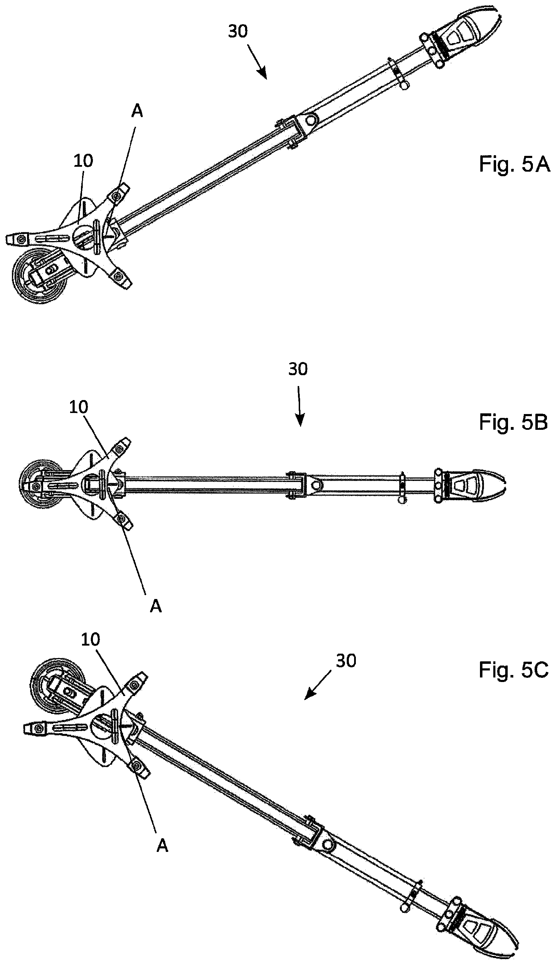

Die seitliche Verschwenkbarkeit des Auslegers 30 gegenüber der Befestigungsvorrichtung 10 um dessen vertikale Schwenkachse A ist in den Figuren 5A bis 5C veranschaulicht, welche eine Verschwenkung des Auslegers 30 von einer linken Endstellung über eine Mittelstellung in eine rechte Endstellung veranschaulichen. Die jeweiligen Endstellungen können durch die Platzverhältnisse innerhalb des Fahrzeugs oder durch entsprechende Endanschläge 26 definiert sein, vgl. Fig. 2.

Beim Ausführungsbeispiel sind an der Unterseite der Anschlussplatte 21 plattenförmige Endanschläge 26 angeordnet, durch welche sich ein maximaler Verschwenkwinkel des Auslegers 30 aus dessen in Fig. 5B dargestellter Mittelstellung in jede Richtung um etwa 35° ergibt. Es versteht sich, dass durch entsprechende Anordnung der Endanschläge 26 die maximale Verschwenkung bzw. der maximaler Verschwenkwinkel auch größer oder kleiner als die bevorzugten 35° eingestellt werden kann.

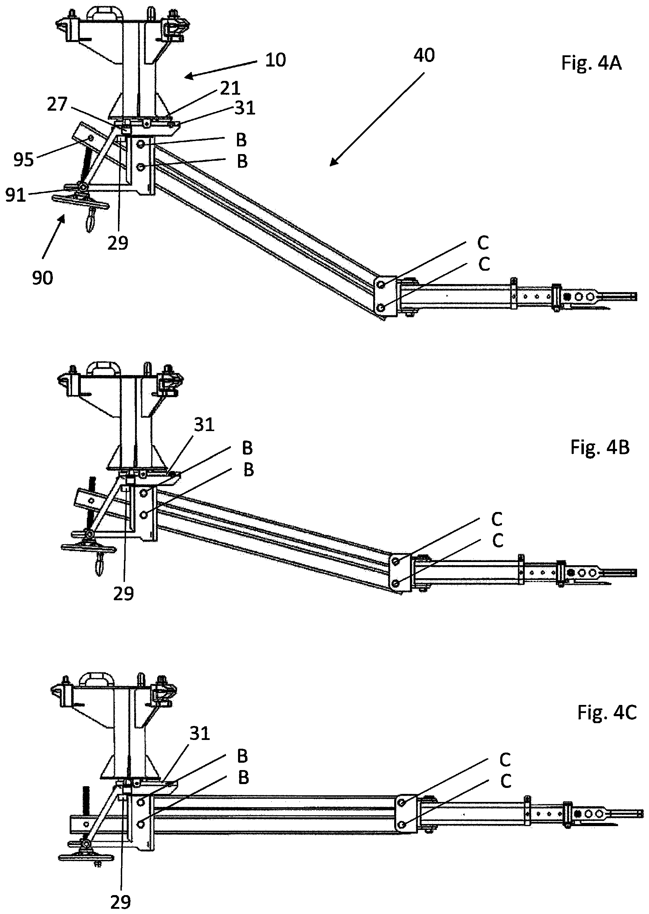

In dem dem Langloch 32 gegenüber liegenden Endbereich der Verbindungsplatte 31 ist auf beiden Seiten jeweils ein als Widerlager wirkendes Stützglied 27 angeordnet, welches an der Unterseite der Montageplatte 21 anliegt, vgl. auch Fig. 4A. Über die Stützglieder 27 wird ein seitliches Verkippen des Auslegers 30 beim Verschwenken des Auslegers 30 um die Achse A verhindert. Die Stützglieder 27 weisen vorteilhaft einen reibungsarmen Elastomerüberzug auf, wodurch sich eine leichtgängige Verschwenkbarkeit des Auslegers 30 um das feststehend angeordnete Einhängelement 23 erreichen lässt.

Als zusätzliches Widerlager kann ebenfalls an dem dem Langloch 32 gegenüber liegenden Endbereich der Verbindungsplatte 31 eine in den Figuren 4A bis 4C zu erkennende, frei drehbare Rolle 29 vorgesehen sein. Die Rolle 29 kann beim Verschwenken des Auslegers 30 an der Unterseite der Anschlussplatte 21 entlang rollen und die insbesondere beim Bewegen schwerer Lasten teilweise erheblich Kräfte in die Befestigungsvorrichtung 10 einleiten. Die Rolle 29 kann in vertikaler Richtung betrachtet etwas höher ausgebildet sein als die Stützglieder 27, so dass die Kräfte im wesentlichen über die Rolle 29 und nicht über die Stützglieder 27 in die Befestigungsvorrichtung 10 eingeleitet werden, wodurch sich eine leichtgängige Verschwenkbarkeit ergibt.

An der Verbindungsplatte 31 ist unterseitig ein Schwenklager 33 angeordnet, in welchem der Ausleger 30 schwenkbar gelagert ist. Das Schwenklager 33 kann mit der Verbindungsplatte 31 lösbar verbunden sein. Auch ist es denkbar, dass die Verbindungsplatte 31 einstückiger Bestandteil des Schwenklagers 33 ist, vgl. Fig. 1.

Das Schwenklager 33 weist auf beiden Seiten des Auslegers 30 jeweils eine Lagerplatte 34 auf, welche sich von der Verbindungsplatte 31 in vertikaler Richtung nach unten erstreckt.

Wie die Darstellung beispielsweise in Fig. 1 erkennen lässt, besteht der Ausleger 30 aus zwei Auslegerabschnitten 40, 50, wobei der in dem Schwenklager 33 angelenkte Auslegerabschnitt 40 nach Art eines Parallelogrammgestänges ausgebildet ist.

Zur Anlenkung des Auslegers 30 bzw. des Auslegerabschnitts 40 weisen die Lagerplatten 34 zwei übereinander angeordnete Bohrungen 39 auf, in welche jeweils ein zur Anbindung eines Auslegerabschnitts 40 dienender Gelenkbolzen 38 eingelassen ist. Die beiden Gelenkbolzen 38 bilden jeweils Höhenschwenkachsen B der Auslegerelemente 41, 42, vgl. auch Fig. 4A bis 4C.

Der Auslegerabschnitt 40 besteht aus zwei sich parallel zueinander erstreckenden Auslegerelementen 41, 42, wobei ein oberes Auslegerelement 41 oberhalb eines unteren Auslegerelements 42 angeordnet ist. Das untere Auslegerelement 42 weist eine größere Längserstreckung als das obere Auslegerelement 41 auf und erstreckt sich im Gegensatz zu dem oberen Auslegerelement 41 nach hinten über die Lagerplatten 34 hinaus.

An ihrem dem Schwenklager 33 gegenüber liegenden Ende sind die beiden Auslegerelemente 41,42 in einem Halteglied 43 ebenfalls durch übereinander angeordnete Bolzenverbindungen 44 angelenkt. Hierzu weist das Halteglied 43 zwei Seitenbleche 45 auf, wobei die beiden Seitenbleche 45 durch ein Querblech 46 miteinander verbunden sind.

Durch die doppelte Anlenkung der Auslegerelemente 41, 42 ergibt sich ein Parallelogrammgestänge, so dass das Halteglied 43 beim Auf- und Abschwenken des Auslegers 30 in dem Schwenklager 33 stets die gleiche Orientierung beibehält. Diese Hubbewegung bzw. Höhenverschwenkbarkeit ist in den Fig. 4A bis 4C noch einmal verdeutlicht, wie weiter unten noch detaillierter beschrieben wird.

Das Halteglied 43 ist zudem nach Art eines den Auslegerabschnitt 40 mit dem Auslegerabschnitt 50 verbindenden Knickgelenks ausgebildet. Die Knickachse D des Knickgelenks ist insbesondere in Fig. 1 zu erkennen und erstreckt sich im Wesentlichen vertikal. Hierzu sind an dem Querblech 46 des Halteglieds 43 in einem oberen und einem unteren Bereich zwei Kragbleche 48 angebunden, die jeweils ein Bohrloch zur Aufnahme eines Quergelenkbolzens 49 aufweisen. Der Quergelenkbolzen 49 bildet das eigentliche Knickgelenk zur Verschwenkung des Auslegerabschnitts 50 gegenüber dem Auslegerabschnitt 40 um eine von dem Quergelenkbolzen 49 definierte zweite Schwenkachse D, welche parallel zu der ersten Schwenkachse A verläuft.

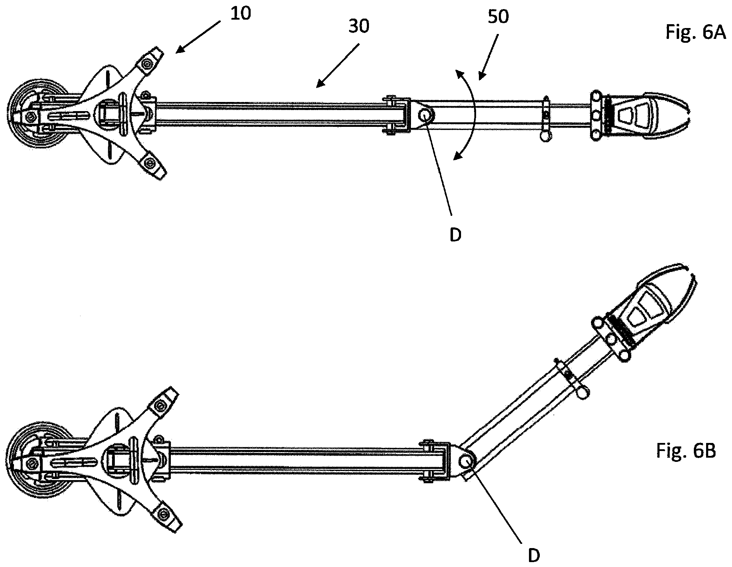

Eine Verschwenkung des Auslegerabschnitts 50 gegenüber dem als Parallelogrammgestänge ausgebildeten Auslegerabschnitt 40 ist in einer Draufsicht in Fig. 6 dargestellt. Dabei sind in Fig. 6 zwei Schwenkpostitionen des Auslegerabschnitts 50 dargestellt, wobei der Auslegerabschnitt 50 in der oberen Darstellung gegenüber dem Auslegerabschnitt 40 nicht verschwenkt ist und in der unteren Darstellung gegenüber dem Auslegerabschnitt 40 in einer Richtung um die zweite Verschwenkachse D verschwenkt ist. Es versteht sich, dass der Teleskoparm 50 auch in die gegenüberliegende Position verschwenkt werden kann, wodurch sich die Aufnahme auch in Bereiche hinter irgendwelchen im Fahrzeuginneren befindlichen Gegenständen verschwenken lässt.

Wie die Darstellung in Fig. 1 erkennen lässt, ist der Auslegerabschnitt 50 als Teleskoparm ausgebildet und umfasst ein äußeres Teleskopierelement 52, in dem ein inneres Teleskopierelement 53 verschiebbar angeordnet ist. An dem der zweiten Schwenkachse D abgewandten Ende des äußeren Teleskopierelements 52 ist eine Bohrung vorgesehen, in die ein mit einer Kugel versehener Stift 54 zur Festlegung des inneren Teleskopierelements 53 eingeschoben ist. Das innere Teleskopierelement 53 weist ein Raster von Bohrungen 55 auf, durch die der Stift 54 geschoben werden kann. Auf diese Weise sind definierte Rastposition des Teleskoparms 50 geschaffen, so dass der Teleskoparm 50 definierte Längen einnehmen kann und die Länge des Auslegers 30 einstellbar ist.

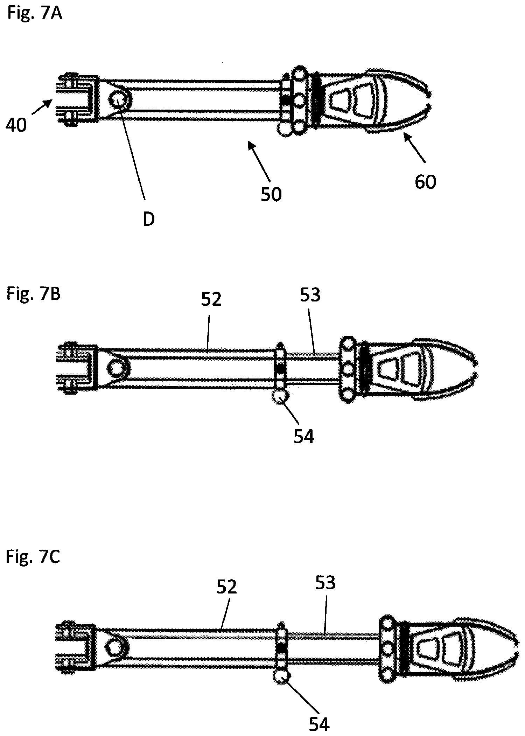

In den Figuren 7A bis 7C sind drei Teleskopstellungen des Teleskoparms 50 gezeigt. In der oberen Darstellung ist der Teleskoparm 50 vollständig zusammengefahren. In der mittleren und unteren Stellung ist der Teleskoparm 50 jeweils in einer ausgefahrenen Stellung gezeigt, wobei die untere Darstellung weiter ausgefahren ist als die mittlere Darstellung.

Am freien Ende des zweiten Auslegerabschnitts 50 ist die Lastaufnahme 60 angeordnet. Zur Befestigung der Lastaufnahme 60 ist an dem vorderen Ende des inneren Teleskopierelements 53 eine weitere Bohrung zur Aufnahme eines Gelenkbolzens 56 vorgesehen, wobei der Gelenkbolzen 56 eine dritte Schwenkachse E parallel zu der ersten Schwenkachse A und der zweiten Schwenkachsen D definiert. Um die dritte Schwenkachse E ist die Lastaufnahme 60 ähnlich einem Handgelenk seitlich verschwenkbar und in der verschwenkten Stellung auch arretierbar.

Die Lastenaufnahme 60 ist nach Art eines Greifers gestaltet und weist zur Anbindung an den Ausleger 30 zwei zueinander parallel und senkrecht zu dem Gelenkbolzen 56 verlaufende Bleche 61 auf, wobei jedes der Bleche 61 eine mittlere Bohrung zur Aufnahme des Gelenkbolzens 56 aufweist. Die Bleche 61 weisen eine längliche Form auf, wobei an beiden Enden jedes Blechs 61 jeweils eine Ausnehmung zur Aufnahme eines Scharnierbolzens 62 angeordnet ist. Die Scharnierbolzen 62 sind fest mit den Blechen 61 durch eine Gewindemutter 63 verbunden, während die mittlere Bohrung frei um den Gelenkbolzen 56 schwenken kann.

Zu beiden Seiten hin weist die Lastaufnahme 60 jeweils ein längliches Greifelement 64 auf, welche gegenüber dem zweiten Auslegerabschnitt 50 nach Art scherenartig auf- und zuschwenken können. Hierzu ist das eine Ende des Greifelements 64 mit einer Hülse 65 versehen. Die Hülse 65 ist auf die Scharnierbolzen 62 aufgesteckt und um diese drehbar, so dass die Greifelemente 64 scharnierartig um die Bolzen 62 schwenken können. Zwischen den Greifelementen 64 ist eine Zugfeder 66 angeordnet, so dass die beiden Greifelemente 64 in Richtung deren Schließstellung gegeneinander vorgespannt sind.

Die Greifelemente 64 weisen an ihrem freien Ende einen in Richtung des jeweils anderen Greifelements 64 gebogenen, verjüngten Endabschnitt 69 auf, so dass eine zu bewegende Last umgriffen werden kann.

Ferner weist die Lastaufnahme 60 eine Lasttrageplatte 67 auf, die von dem unteren Blech 61 nach vorne absteht und auf ihrer Oberseite eine Last aufnehmen kann. Um einen sicheren Halt der Last zu erreichen, kann die Lasttrageplatte 67 mit den Greifelementen 64 derart gekoppelt sein, dass sich mit größer werdender Last eine größere Schließkraft zwischen den Greifelementen 64 einstellt. Die Lastaufnahme 60 kann entsprechend der zu bewegenden Last auch gegen andere, lastspezifische Lastaufnahmen 60 ersetzt werden.

Um ein einfaches Anheben auch schwerer Lasten zu ermöglichen, ist im Bereich des den Ausleger 30 aufnehmenden Schwenklagers 33 eine als Gewindetrieb ausgebildete Hubvorrichtung 90 angeordnet.

Diese weist eine Gewindestange 93 auf, welche zwischen dem schwenkbaren Ausleger 30 bzw. dem unteren Auslegerelement 42 und einem nicht verschwenkbaren Lagerteil 36 nach Art eines Spindeltriebs angeordnet ist, so dass sich bei einer Drehung der Gewindestange 93 die Schwenkstellung des Auslegers 30 ändert.

Hierzu ist in dem Auslegerelement 42 ein Gewindestück 92 mit einem Innengewinde um einen Schwenkbolzen 95 schwenkbeweglich angeordnet. Die Gewindestange 93 ist an dem Lagerteil 36 drehbar angeordnet, so dass infolge einer Drehung der Gewindestange 93 über eine hierzu vorgesehene Kurbel 96 der Ausleger 30 auf- und ab geschwenkt werden kann, wie dies in den Figuren 4A bis 4C dargestellt ist.

In der oberen Darstellung in Fig. 4A ist der Ausleger 30 in einer abgesenkten Position gezeigt. Durch eine Drehung der Kurbel 96 wird der Ausleger 30 angehoben und wandert zunächst über die in der mittleren Darstellung gemäß Fig. 4B gezeigten Hubposition zu einer in der unteren Darstellung gemäß Fig. 4 C vollständig angehobenen Hubposition. Dabei verbleibt, bedingt durch das Parallelogrammgestänge, der mit der Lastenaufnahme 60 verbundene Teleskoparm 50 stets in einer waagerechten Position, so dass ein Kippen der aufgenommene Last vorteilhaft vermieden wird. Über die als Gewindetrieb ausgebildete Hubvorrichtung 90 lassen sich auch schwere Lasten mit geringem Kraftaufwand anheben.

### Bezugszeichen:

- 1: Vorrichtung
- 2: Fahrzeug
- 10: Befestigungsvorrichtung
- 11: Klemmen
- 12: Kragarme
- 13: Zentralstück
- 14: Spannbacke
- 15: Spannbacke
- 16: Platte
- 17: Handgriff
- 18: Schraubvorrichtung
- 19: Betätigungselement
- 20: Fußbereich
- 21: Anschlussplatte
- 22: Versteifungsrippen
- 23: Einhängelement
- 23.1: Kopf
- 23.2: Bolzenabschnitt
- 24: Nut
- 25: Ecke
- 26: Endanschläge
- 27: Stützglied
- 29: Rolle
- 30: Ausleger
- 31: Verbindungsplatte
- 32: Langloch
- 33: Schwenklager
- 34: Lagerplatte
- 36: Lagerteil
- 38: Gelenkbolzen
- 39: Bohrungen
- 40: Auslegerabschnitt
- 41: oberes Auslegerelement
- 42: unteres Auslegerelement
- 43: Halteglied
- 44: Bolzenverbindungen
- 45: Seitenbleche
- 46: Querblech
- 48: Kragbleche
- 49: Quergelenkbolzen
- 50: Auslegerabschnitt, Teleskoparm
- 52: äußeres Teleskopierelement
- 53: inneres Teleskopierelement
- 54: Stift
- 55: Rastbohrungen
- 56: Gelenkbolzen
- 60: Lastaufnahme
- 61: Bleche
- 62: Scharnierbolzen
- 63: Gewindemutter
- 64: Greifelemente
- 65: Hülse
- 66: Zugfeder
- 67: Lasttrageplatte
- 68: Lastanlageplatte
- 69: verjüngter Endabschnitt
- 70: Fahrzeugöffnung
- 71: Lukenring
- 90: Hubvorrichtung
- 92: erstes Gewindestück
- 93: Gewindestange
- 95: Schwenkbolzen
- 96: Kurbel

- A: erste Schwenkachse
- B: erste Höhenschwenkachse
- C: zweite Höhenschwenkachse
- D: zweite Schwenkachse
- E: dritte Schwenkachse

## Patentansprüche

1. Vorrichtung zum Bewegen von Lasten innerhalb eines Fahrzeugs (2) mit einer Befestigungsvorrichtung (10) zur Befestigung an dem Fahrzeug (2) und einer gegenüber der Befestigungsvorrichtung (10) bewegbar angeordneten Lastaufnahme (60),
**dadurch gekennzeichnet,**
**dass** die Befestigungsvorrichtung (10) in einer Fahrzeugöffnung (70) arretierbar ist, wobei die Fahrzeugöffnung (70) von einer Dachluke gebildet wird, in welche die Befestigungsvorrichtung (10) einsetzbar ist.

2. Fahrzeug, insbesondere militärisches Fahrzeug, mit einer Vorrichtung (1) zum Bewegen von Lasten innerhalb des Fahrzeugs, mit einer Befestigungsvorrichtung (10) zur Befestigung an dem Fahrzeug und einer gegenüber der Befestigungsvorrichtung (10) bewegbar angeordneten Lastaufnahme (60),
**dadurch gekennzeichnet,**
**dass** die Befestigungsvorrichtung (10) in einer Fahrzeugöffnung (70) arretiert ist, wobei die Fahrzeugöffnung (70) von einer Dachluke gebildet wird, in welche die Befestigungsvorrichtung (10) eingesetzt ist.

3. Vorrichtung oder Fahrzeug nach Anspruch 1 oder Anspruch 2, **dadurch gekennzeichnet, dass** die Befestigungsvorrichtung (10) lösbar an der Fahrzeugöffnung (70) arretierbar ist.

4. Vorrichtung oder Fahrzeug nach einem der vorhergehenden Ansprüche, **dadurch gekennzeichnet, dass** die Befestigungsvorrichtung (10) Klemmen (11) zur Befestigung an der Fahrzeugöffnung (70) aufweist.

5. Vorrichtung oder Fahrzeug nach einem der vorhergehenden Ansprüche, **dadurch gekennzeichnet, dass** die Befestigungsvorrichtung (10) und die Lastaufnahme (60) über einen Ausleger (30) verbunden sind.

6. Vorrichtung oder Fahrzeug nach Anspruch 5, **dadurch gekennzeichnet, dass** die Länge des Auslegers (30) einstellbar ist.

7. Vorrichtung oder Fahrzeug nach Anspruch 5 oder 6, **dadurch gekennzeichnet, dass** der Ausleger (30) ein Knickgelenk (49, 56) zum Verschwenken der Lastaufnahme (60) aufweist.

8. Vorrichtung oder Fahrzeug nach einem der vorhergehenden Ansprüche, **dadurch gekennzeichnet, dass** der Ausleger (30) seitlich verschwenkbar gegenüber der Befestigungvorrichtung (10) gelagert ist.

9. Vorrichtung oder Fahrzeug nach einem der vorhergehenden Ansprüche, **dadurch gekennzeichnet, dass** der Ausleger (30) höhenverschwenkbar an der Befestigungsvorrichtung (10) angeordnet ist.

10. Vorrichtung oder Fahrzeug nach einem der vorhergehenden Ansprüche, **dadurch gekennzeichnet, dass** der Ausleger (30) ein Parallelogrammgestänge (40) zur Führung von Höhenbewegungen der Lastaufnahme (60) aufweist.

11. Vorrichtung oder Fahrzeug nach einem der Ansprüche 5 bis 10, **dadurch gekennzeichnet, dass** der Ausleger (30) hängend an der Befestigungsvorrichtung (10) angeordnet ist.

12. Vorrichtung oder Fahrzeug nach einem der Ansprüche 5 bis 11, **dadurch gekennzeichnet, dass** die Befestigungsvorrichtung (10) den höchsten Punkt der Vorrichtung bildet.

13. Vorrichtung oder Fahrzeug nach einem der vorhergehenden Ansprüche, **dadurch gekennzeichnet, dass** die Befestigungsvorrichtung (10) derart ausgebildet ist, dass sie von fahrzeugaußen in der Fahrzeugöffnung (70) montierbar ist.

14. Verfahren zum Bewegen von Lasten innerhalb eines Fahrzeugs (2) mit einer Vorrichtung (1), die über eine Befestigungsvorrichtung (10) an dem Fahrzeug (2) festgelegt ist, und einer gegenüber der Befestigungsvorrichtung (10) bewegbar angeordneten Lastaufnahme (60),
**dadurch gekennzeichnet,**
**dass** in einem Schritt die Befestigungsvorrichtung (10) in einer von einer Dachluke gebildeten Fahrzeugöffnung (70) arretiert und in einem späteren Schritt die Last innerhalb des Fahrzeugs (2) bewegt wird.

15. Verfahren nach Anspruch 14, **dadurch gekennzeichnet, dass** die Vorrichtung (1) nach einem der Ansprüche 1 bis 13 ausgebildet ist.

## Claims

1. Device for moving loads inside a vehicle (2), comprising a fastening device (10) for fastening to the vehicle (2) and a load suspension means (60) which is arranged movably in relation to the fastening device (10), **characterized in that** the fastening device (10) is lockable in a vehicle opening (70), wherein the vehicle opening (70) is formed by a roof hatch into which the fastening device (10) is insertable.

2. Vehicle, in particular military vehicle, with a device (1) for moving loads within the vehicle, comprising a fastening device (10) for fastening to the vehicle and a load suspension means (60) which is arranged movably in relation to the fastening device (10), **characterized in that** the fastening device (10) is lockable in a vehicle opening (70), wherein the vehicle opening (70) is formed by a roof hatch into which the fastening device (10) is inserted.

3. Device or vehicle according to Claim 1 or Claim 2, **characterized in that** the fastening device (10) is lockable releasably to the vehicle opening (70).

4. Device or vehicle according to one of the preceding claims, **characterized in that** the fastening device (10) has clamps (11) for fastening to the vehicle opening (70).

5. Device or vehicle according to one of the preceding claims, **characterized in that** the fastening device (10) and the load suspension means (60) are connected via an extension arm (30).

6. Device or vehicle according to Claim 5, **characterized in that** the length of the extension arm (30) is adjustable.

7. Device or vehicle according to Claim 5 or 6, **characterized in that** the extension arm (30) has an articulated joint (49, 56) for pivoting the load suspension means (60).

8. Device or vehicle according to one of the preceding claims, **characterized in that** the extension arm (30) is mounted so as to be pivotable laterally in relation to the fastening device (10).

9. Device or vehicle according to one of the preceding claims, **characterized in that** the extension arm (30) is arranged in a vertically pivotable manner on the fastening device (10).

10. Device or vehicle according to one of the preceding claims, **characterized in that** the extension arm (30) has a parallelogram linkage (40) for guiding vertical movements of the load suspension means (60).

11. Device or vehicle according to one of Claims 5 to 10, **characterized in that** the extension arm (30) is arranged hanging on the fastening device (10).

12. Device or vehicle according to one of Claims 5 to 11, **characterized in that** the fastening device (10) forms the highest point of the device.

13. Device or vehicle according to one of the preceding claims, **characterized in that** the fastening device (10) is designed in such a manner that it is fittable in the vehicle opening (70) from the outside of the vehicle.

14. Method for moving loads inside a vehicle (2), with a device (1) which is secured to the vehicle (2) via a fastening device (10), and a load suspension means (60) which is arranged movably in relation to the fastening device (10), **characterized in that**, in one step, the fastening device (10) is locked in a vehicle opening (70) formed by a roof hatch and, in a later step, the load is moved inside the vehicle (2).

15. Method according to Claim 14, **characterized in that** the device (1) is designed according to one of Claims 1 to 13.

## Revendications

1. Dispositif pour déplacer des charges à l'intérieur d'un véhicule (2) avec un dispositif de fixation (10) pour la fixation au véhicule (2) et un support de charge (60) agencé de façon mobile par rapport au dispositif de fixation (10), **caractérisé en ce que** le dispositif de fixation (10) peut être calé dans une ouverture du véhicule (70), dans lequel l'ouverture du véhicule (70) est formée par une hublot de toit, dans laquelle le dispositif de fixation (10) peut être inséré.

2. Véhicule, en particulier véhicule militaire, avec un dispositif (1) pour déplacer des charges à l'intérieur du véhicule, avec un dispositif de fixation (10) pour la fixation au véhicule et un support de charge (60) agencé de façon mobile par rapport au dispositif de fixation (10), **caractérisé en ce que** le dispositif de fixation (10) est calé dans une ouverture du véhicule (70), dans lequel l'ouverture du véhicule (70) est formée par une fenêtre de toit, dans laquelle le dispositif de fixation (10) est inséré.

3. Dispositif ou véhicule selon la revendication 1 ou la revendication 2, **caractérisé en ce que** le dispositif de fixation (10) est calé de façon séparable à l'ouverture du véhicule (70).

4. Dispositif ou véhicule selon l'une quelconque des revendications précédentes, **caractérisé en ce que** le dispositif de fixation (10) présente des pinces (11) pour la fixation à l'ouverture du véhicule (70).

5. Dispositif ou véhicule selon l'une quelconque des revendications précédentes, **caractérisé en ce que** le dispositif de fixation (10) et le support de charge (60) sont reliés par une flèche (30).

6. Dispositif ou véhicule selon la revendication 5, **caractérisé en ce que** la longueur de la flèche (30) est réglable.

7. Dispositif ou véhicule selon la revendication 5 ou 6, **caractérisé en ce que** la flèche (30) présente une articulation (49, 56) pour faire pivoter le support de charge (60).

8. Dispositif ou véhicule selon l'une quelconque des revendications précédentes, **caractérisé en ce que** la flèche (30) est montée de façon pivotante latéralement par rapport au dispositif de fixation (10).

9. Dispositif ou véhicule selon l'une quelconque des revendications précédentes, **caractérisé en ce que** la flèche (30) est agencée de façon pivotante en hauteur sur le dispositif de fixation (10).

10. Dispositif ou véhicule selon l'une quelconque des revendications précédentes, **caractérisé en ce que** la flèche (30) présente un bras en parallélogramme articulé (40) pour le guidage de mouvements en hauteur du support de charge (60).

11. Dispositif ou véhicule selon l'une quelconque des revendications 5 à 10, **caractérisé en ce que** la flèche (30) est agencée en suspension au dispositif de fixation (10).

12. Dispositif ou véhicule selon l'une quelconque des revendications 5 à 11, **caractérisé en ce que** le dispositif de fixation (10) forme le point le plus élevé du dispositif.

13. Dispositif ou véhicule selon l'une quelconque des revendications précédentes, **caractérisé en ce que** le dispositif de fixation (10) est configuré de telle manière qu'il puisse être monté dans l'ouverture du véhicule (70) par l'extérieur du véhicule.

14. Procédé pour déplacer des charges à l'intérieur d'un véhicule (2) avec un dispositif (1), qui est fixé au véhicule (2) par un dispositif de fixation (10), et un support de charge (60) agencé de façon mobile par rapport au dispositif de fixation (10), **caractérisé en ce que** dans une étape on cale le dispositif de fixation (10) dans une ouverture du véhicule (70) formée par une hublot de toit et dans une étape ultérieure on déplace la charge à l'intérieur du véhicule (2).

15. Procédé selon la revendication 14, **caractérisé en ce que** le dispositif (1) est réalisé selon l'une quelconque des revendications 1 à 13.
